# EUROPÄISCHE PATENTSCHRIFT

(11) **EP 1 045 928 B1**
(45) Veröffentlichungstag und Bekanntmachung des Hinweises auf die Patenterteilung: **29.08.2001**
(21) Anmeldenummer: 98966293.7
(22) Anmeldetag: 10.12.1998
(51) Int. Cl.: C21B 5/00, C21B 13/00, C10J 3/46

(54) **VERFAHREN ZUR ERZEUGUNG VON ROHEISEN**
METHOD FOR PRODUCING PIG IRON
PROCEDE DE PRODUCTION DE FONTE BRUTE

(30) Priorität: 08.01.1998 DE 19800418
(43) Veröffentlichungstag der Anmeldung: 25.10.2000
(73) Patentinhaber: Wolf, Bodo, 09638 Lichtenberg (DE)
(72) Erfinder: Wolf, Bodo, 09638 Lichtenberg (DE)
(74) Vertreter: Zellentin, Wiger, Dipl.-Ing.
(86) Internationale Anmeldenummer: EP9808067
(87) Internationale Veröffentlichungsnummer: WO9935294

(56) Entgegenhaltungen:
- EP-A- 0 657 550
- DD-A- 132 672
- DE-A- 1 939 354
- DE-A- 2 312 600
- DE-A- 2 413 558
- DE-A- 2 431 537
- GB-A- 858 561
- GUDENAU H W ET AL: "VERSUCHE ZUM KOMBINIERTEN EINBLASEN VON KOHLENSTAUB UND FEINKOERNIGEN EISENERZEN IN DEN HOCHOFEN" STAHL UND EISEN, Bd. 117, Nr. 6, 16. Juni 1997, Seiten 61-68, 103, XP000692731 in der Anmeldung erwähnt
- PATENT ABSTRACTS OF JAPAN vol. 007, no. 147 (C-173), 28. Juni 1983 & JP 58 058206 A (SUMITOMO KINZOKU KOGYO KK), 6. April 1983

## Beschreibung

Die Erfindung betrifft ein Verfahren zur Erzeugung von Roheisen mit Hilfe von fossilen und nachwachsenden Brennstoffen, insbesondere von Stein- und Braunkohlen oder anderen organischen Brennstoffen, wie Müll und Klärschlamm, aus Eisenerz oder -oxiden, das oder die naturbelassen, pelletiert oder in Form von Feinerz oder Konzentat bereitgestellt werden.

Die Erfindung kann angewendet werden bei der Herstellung von Roheisen in Hochöfen oder anderen Vorrichtungen, die für eine mehrstufige Prozeßführung, wie z.B. die Reduktion des Erzes zu Eisen und das Aufschmelzen des Eisens, geeignet sind.

Die Prozeßführung bei der Roheisenerzeugung mit Hilfe von Hochöfen ist seit Jahrzehnten weitestgehend unverändert geblieben, obwohl eine Vielzahl von Maßnahmen zur Leistungssteigerung, durch Vergrößerung der Ofenabmessungen und Erhöhung des Prozeßdruckes, und zur Reduzierung des Koksverbrauches, z.B. durch Einblasung von anderen Brennstoffen, wie Kohle, Heizöl, Erdgas, Kokereigas, Müll, Klärschlamm, Erz sowie die Verwendung von Sauerstoff u.a. bekannt geworden sind. Ergebnisse teilen u.a. Gudenau in der Zeitschrft "Stahl und Eisen" 117 (1997) Nr.6 unter dem Titel "Versuche zum kombiniertem Einblasen von Kohlenstaub und feinkörnigem Eisenerz in den Hochofen" und auf dem 1^{st} TIMS/IEHK Metallurgical Symposium 28/29 September 1997 in Kairo unter dem Titel "Environmental and econmical benefits by injecting iron containing recyclings and steel plant residues into the blast furnace" und der VDI mit dem Handbuch "Verwertung durch Einschmelzen, Sekundärmetallgewinnung und Energienutzung bei der thermischen Behandlung von Abfällen" zum Seminar vom 22. und 23. September 1997 in Düsseldorf mit.

Eine grundsätzliche Beschreibung des Hochofenprozesses gibt unter anderem das Lehrbuch von Ost, H.; Rassow, B.: "Lehrbuch der chemischen Technologie", 26. Auflage, Leipzig, Barth-Verlag, 1955.

Kennzeichnend für den Stand der Technik der Prozeßführung in Hochöfen ist die Vergasung von Koks und anderen organischen Brennstoffen im Gegenstrom zur Reduktion des Eisenerzes, so daß der Prozeßwärmebedarf und die jeweilige Oxidationsstufe des Erzes die Gaszusammensetzung und damit die maximal mögliche Brennstoffausnutzung im Hochofen, die bezogen auf das Oxidationspotential der Brennstoffe im praktischen Betrieb annähernd 75 % erreicht, bestimmen. Unverzichtbarer Bestandteil des Hochofenprozesses ist deshalb die regenerative Vorwärmung der Prozeßluft, die außerhalb des Hochofens einen Teil der chemischen Enthalpie des Gichtgases nutzt und damit in den Prozeß zurückführt. Gute Hochofenanlagen erreichen somit eine Brennstoffausnutzung von ca. 83 % bei Verwendung eines hohen Anteils von teurem, knappem Hüttenkoks als Brennstoff.

In der DE-OS 19 39 354 wird eine Kopplung eines Hochofen- oder Gebläseschachtofenverfahrens mit einer externen Reduktionsgasherstellung beschrieben wobei Gichtgas aus dem Ofen mit einem, vorzugsweise 1 bis 13 Kohlenstoffatome enthaltenden, gasförmigen, flüssigen oder festen Kohlenwasserstoff in einem Röhrenerhitzer und/oder Wärmeaustauscher unter indirekter Wärmezuführung umgesetzt wird. Ein derartiges allotropes Verfahren besitzt jedoch den Nachteil, daß die Reaktionstemperatur auf ca. 800 bis maximal 950°C begrenzt ist. Damit kann nur ein Reduktionsgas erhalten werden, das einen relativ hohen Anteil an CO₂ und H₂O aufweist und somit ein geringes Reduktionspotential gegenüber dem Eisenoxid besitzt. Als Folge muß der Ofen mit einer großen Gasmenge belastet werden, was zu einer Leistungseinbuße führt. Darüber hinaus werden das im Reduktionsgas enthaltene CO₂ und der Wasserdampf an dem glühenden Koks im Hochofen reduziert, was ebenfalls zu einer Verminderung der Leistung des Ofens beiträgt.

Die relativ niedrigen Reaktionstemperaturen bis maximal 950°C bei diesem allotropen Reduktionsgasherstellungsverfahren liegen aber unterhalb der Schmelztemperaturen von anorganischen Bestandteilen, wie sie normalerweise in qualitativ minderwertigen Brennstoffen, wie Stein- und Braunkohlen, Müll oder Klärschlämmen enthalten sind. Daraus ergibt sich, daß dieses Verfahren nur für sehr reine und damit teure Brennstoffe geeignet ist.

In der DE-AS 24 13 558 erfolgt die externe Herstellung eines Reduktionsgases mit Hilfe eines Plasmabrenners, wobei die für die Vergasung der Brennstoffe erforderliche Reaktionsenthalpie durch Elektroenergie aufgebracht werden muß. Damit ist dieses Verfahren sehr kostenaufwendig und nur durchführbar, wenn billige Elektroenergie zur Verfügung steht. Im Verfahren werden rückgeführtes Gichtgas, das CO, CO₂, H₂ und H₂O enthält und ggf. Kohlenstoff und/oder Kohlenwasserstoff in einem Lichtbogen ionisiert und mit einem weiteren Teilstrom von Gichtgas und Kohlenstoff und/oder Kohlenwasserstoff in einer Mischkammer in Kontakt gebracht, sodaß eine endotherme Nachreaktion abläuft. Das Verfahren ist jedoch ebenfalls nur für sehr reine Ausgangsprodukte, wie Kohlenwasserstoffe oder hochwertigen Kohlenstaub geeignet, da eine Schlackeabführung sowohl aus der Brennkammer. als auch aus der Misch- bzw. Reaktionskammer der Reduktionsgaserzeugung nicht möglich ist.

Insbesondere in Hinblick auf eine ökologisch bedingte Energieverteuerung beispielsweise durch die Einführung einer Energiesteuer wird die Wirtschaftlichkeit dieses Verfahrens abnehmen und andere technische Lösungen zur Reduktionsgaserzeugung, wie die vorliegende Erfindung erfordern.

Aus der GB-PS 858 561 ist bekannt, feste Brennstoffe mit Luft und/oder Sauerstoff zu einem Reduktionsgas umzusetzen, wobei die heißen Verbrennungsprodukte bei einer Temperatur von ca. 1100 bis 1600°C über ein separates Rohrsystem in einen Hoch- oder Gebläseschachtofen eingeblasen werden müssen. Die technische Ausführung dieses Verfahrens ist sehr kompliziert und kostenaufwendig. Zudem haben sich derartige Verfahrensweisen, bei denen Gase bei diesen hohen Temperaturen den Hilfsdüsen zugeführt werden müssen, in der Praxis nicht bewährt. Die hohen Gastemperaturen würden die Errichtung einer externen Kohlevergasung unmittelbar am Hochofen erfordern, was bekannterweise aufgrund der baulichen Gegebenheiten der Hochofenanlagen praktisch nicht realisierbar ist.

Die technische Aufgabe und das Ziel der Erfindung sind es daher, neue Möglichkeiten zur besseren Ausnutzung der Brennstoffe sowie zur weiteren Substitution von Hüttenkoks durch andere qualitativ minderwertigere Brennstoffe, vorzugsweise durch Braun- und Steinkohlen aber auch Müll und Klärschlämme sowie bei der Reduktionsgasherstellung anfallender Koksstaub, und zur Leistungssteigerung der Hochöfen vorzuschlagen.

Die Aufgabe wird gelöst durch Analyse der entscheidenden Prozeßabläufe der Eisenerzreduktion und Eisenverhüttung mit Hilfe des thermodynamischen Systems Eisen-Kohlenstoff-Wasserstoff-Sauerstoff.

Erfindungsgemäß wird vorgeschlagen, den Hochofenprozeß mit einem externen, mehrstufigen Prozeß zur Vergasung von vorzugsweise staubförmigen fossilen und nachwachsenden sowie anderen organischen Brennstoffen und/oder im Vergasungsprozeß selbst anfallendem Koks zu koppeln, bei dem in einer ersten Prozeßstufe die Brennstoffe mit Luft und/oder Sauerstoff unter Zugabe von Gichtgas aus dem Hochofen und/oder Wasserdampf unter einem Druck, der höher als der Druck im Hochofen in Höhe der Windformen ist, und einer Temperatur zwischen 1000 und 1.800 °C zu Reduktionsgas exotherm vergast werden, dessen Qualität annähernd der des Gleichgewichtsgases an der Phasengrenze Eisen/Wüstit im thermodynamischen System Eisen-Kohlenstoff-Wasserstoff-Sauerstoff entspricht, und bei dem durch Einblasen von weiteren Brennstoffen in eine zweite Prozeßstufe, die dort teilweise mit dem heißen Reduktionsgas chemisch endotherm reagieren, die Qualität des Reduktiosgases so verbessert wird, daß des Molverhältnis der reduzierenden Gasbestandteile Kohlenmonoxid und Wasserstoff zu denen der oxidierenden Bestandteile Kohlendioxid und Wasserdampf mindestens 3:1 beträgt, bevor es aus dem Vergasungsprozeß austritt und in Höhe der oder über die Windformen mit einer Temperatur von 300 bis 1.000 °C in den Hochofen eingeblasen wird.

Die Vergasung der Brennstoffe in der ersten Prozeßstufe erfolgt vorzugweise oberhalb der Schmelztemperatur von anorganischen Bestandteilen, wobei die Verunreinigungen dann in Form von Schlacke aus der zweiten Prozeßstufe abgeführt werden können.

Der in der zweiten Prozeßstufe nicht umgesetzte, als Koksstaub im Reduktionsgas vorliegende Brennstaub wird erfindungsgemäß mit dem Reduktionsgas in den Hochofen eingeblasen oder mit Hilfe einer zwischem Vergasungsprozeß und Hochofen angeordneten Vorrichtung des Standes der Technik aus dem Reduktionsgas abgeschieden.

Vorteilhaft kann über die gezielte Einblasung von Koksstaub aus der zweiten Prozeßstufe in den Hochofen eine Regelung des Temperaturgradienten in den Reduktionszonen des Ofens erfolgen und somit die Wärmebilanz des Hochofens gesteuert werden.

Moderne Verfahren sollten eine nahezu rückstandsfreie Verwertung der Brennstoffe gewährleisten. Dies wird dadurch sichergestellt, daß bevorzugt bei Betriebszuständen, die keine zusätzliche Eingeblasung von Koksstaub erlauben, erfindungsgemäß bei derartigen Betriebszuständen der anfallende Koksstaub vorzugsweise wieder in den Vergasungsprozeß zurückgeführt werden kann, wobei in diesem Fall vorteilhaft die Zuführung von frischem Brennstoff zum Vergasungsprozeß zu Gunsten der Rückführung des angefallenen Koksstaubs reduziert oder eingestellt werden kann. Dabei kann der Koksstaub sowohl in die erste, als auch in die zweite Vergasungsstufe rückgeführt werden.

Der angefallene Koksstaub ist in der Regel reaktionsträger, als der externe Brennstoff. Daher wird bei der Rückführung in die zweite Prozeßstufe zur Sicherstellung eines weitestgehenden Umsatzes bevorzugt zuerst der reaktionsträge Koksstaub dem heißen Vergasungsmittel aus der ersten Prozeßstufe in dessen Strömungsrichtung zugeführt um das höhere Temperaturniveau zur Aktivierung des reaktionsträgen Koksstaubs zu nutzen. Erst danach wird der frische Brennstoff dem bereits durch die Einblasung des Koksstaubs abgekühlten Vergasungsmittel zugeführt, dessen niedrigeres Temperaturniveau jedoch für eine weitgehende Vergasung von frischem Brennstoff ausreicht.

Der Koksstaub kann vorteilhaft auch aus dem Prozeß abgeführt und anderweitig verwendet werden.

Erfindungsgemäß wird weiterhin vorgeschlagen, den staubförmigen Brennstoffen oder dem Koksstaub vor dem Einblasen in die zweite Prozeßstufe des Vergasungsprozesses Eisenerze oder Eisenoxide in Form von Feinerz oder Konzentrat zuzugeben und diese in der zweiten Prozeßstufe der Vergasung mindestens teilweise zu reduzieren, das anfallende Gemisch Koksstaub/vorreduziertes Eisenerz/Eisenschwamm mit dem Reduktionsgas in den Hochofen einzublasen, oder dieses aus dem die zweite Prozeßstufe der Vergasung verlassenden Reduktionsgas abzuscheiden, und zur Vermeidung von Abrasivität mit Hilfe von Dichtstromfördersystemen unabhängig vom Reduktionsgas in den Hochofen oder eine andere bekannte Vorrichtung, z.B. eine Schmelzwanne einzublasen und dort aufzuschmelzen.

Der wirtschaftliche Vorteil der Erfindung resultiert aus der Entlastung der investaufwendigen Hochofenanlagen und Kokereien durch externe Herstellung von Reduktionsgas und Koksstaub durch Vergasung von gegenüber Hüttenkoks deutlich billigeren Brennstoffen mit Hilfe investkostengünstigeren Vergasungsanlagen und aus einer dadurch bis zu 30 % möglichen Steigerung der Roheisenproduktion der Hochöfen.

### Ausführungsbeispiel

### Die Erfindung soll nachfolgend für zwei Anwendungsfälle beschrieben werden. Anwendungsfall 1

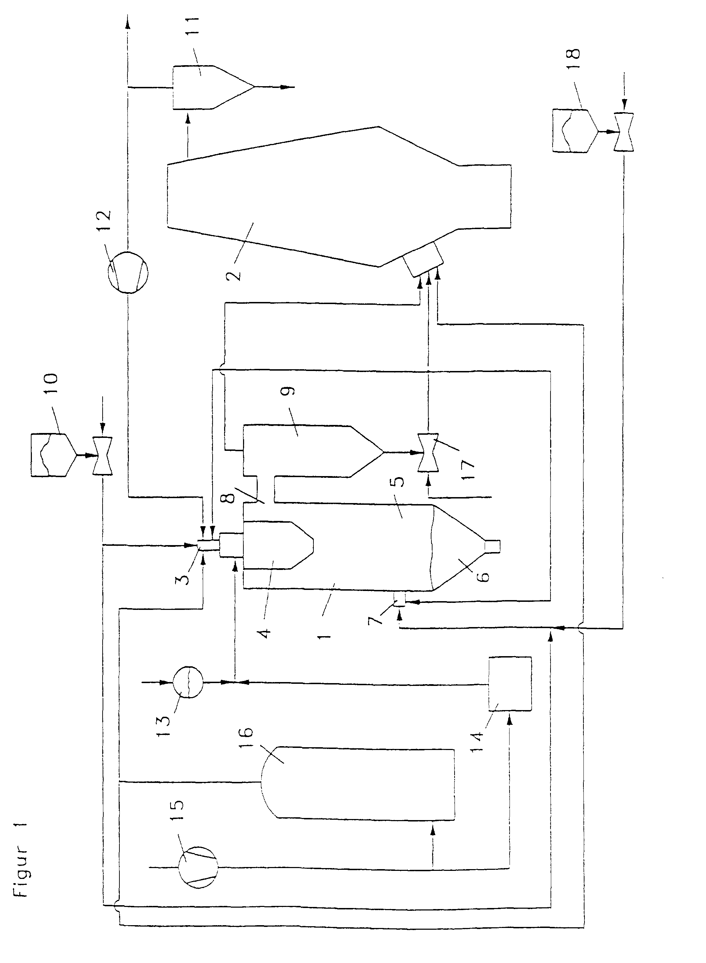

Die Beschreibung des Anwendungsfalles 1, bei dem ein zweistufiger Vergasungsprozeß 1 mit einem Hochofen 2 gekoppelt wird, erfolgt mit Hilfe von Figur 1.
Über den Brenner 3 werden in die erste Prozeßstufe 4 des Vergasungsprozesses 1 Steinkohlenbrennstaub, der über das Dichtstromfördersystem 10 zugeführt wird, als externer Brennstoff und als Vergasungsmittel in der Reinigungsanlage 11 entstaubtes und in der Kompression 12 im Druck erhöhtes Gichtgas und Sauerstoff aus der Luftzerlegungsanlage 14, die die Luft über das Druckluftsystem der Hochofenanlage 15 bezieht, sowie Wasserdampf aus dem Dampfsystem 13 und gegebenenfalls Heißluft aus den Cowpem 16 eingeblasen und dort bei einer Temperatur von 1.500 °C und einem Druck von 7 bar durch chemisch-exotherme Reaktion in Reduktionsgas umgewandelt. Die Asche der Brennstoffe wird dabei aufgeschmolzen und fließt aus der ersten Prozeßstufe 4 durch die zweite Prozeßstufe 5 in das Wasserbad 6, wo sie eluierfest erstarrt.

Die Luftentnahme aus dem Druckluftsystem 15 der Hochofenanlage reduziert die Anforderungen an die regenerative Heißwinderzeugung im Cowper 16. Mit Hilfe der gegebenen Möglichkeiten zur Mischung der Vergasungsmittel Luft, Sauerstoff, Gichtgas und Wasserdampf kann der Volumenstrom im Vergasungsprozeß 1 und damit wiederum der Wärmetransport im Hochofenprozeß 2 gesteuert werden.

Das Reduktionsgas aus der ersten Prozeßstufe 4 des Vergasungsprozesses 1 wird mit einer Geschwindigkeit von ca. 20 m/s in die zweite Prozeßstufe 5 eingeblasen und dort ebenfalls mit über das Dichtstromfördersystem 10 und Lanzen 7 zugeführtem Steinkohlenbrennstaub beladen. Der Brennstaub reagiert in der zweiten Prozeßstufe 5 mit dem 1.500 °C heißen Reduktionsgas chemisch endotherm, wodurch die Temperatur des Reduktionsgases in der zweiten Prozeßstufe 5 auf 700 °C absinkt. Dabei fällt Restkoks an, der mit dem Gas über den Gasaustritt 8 aus dem Vergasungsprozeß 1 in einen Zyklon 9 ausgetragen wird. Im Zyklon 9 wird der Restkoks weitestgehend vom Reduktionsgas getrennt. Die nachfolgende Tabelle zeigt den Vergleich der Gaszusammensetzungen des Reduktionsgases nach der ersten und der zweiten Prozeßstufe 4 und 5 des Vergasungsprozesses 1.

| | Reduktionsgaszusammensetzung nach | |
|---|---|---|
| Gaskomponente | 1. Prozeßstufe | 2. Prozeßstufe |
| | Vol.-% | Vol.-% |
| CO | 46,41 | 50,29 |
| CO₂ | 14,97 | 7,31 |
| H₂ | 7,09 | 21,24 |
| H₂O | 9,14 | 3,63 |
| CH₄ | 0,00 | 0,01 |
| N₂ | 22,22 | 17,34 |
| H₂S | 0,13 | 0,15 |
| COS | 0,04 | 0,03 |
| Summe | 100,00 | 100,00 |

Bezogen auf den insgesamt in die erste und zweite Prozeßstufe eingeblasenen Kohlebrennstaub werden 1,1 m³ Reduktiongas im Normzustand und 390 g Restkoks je kg Steinkohlenbrennstaub erzeugt. Das Reduktionsgas und der Restkoks werden aus dem Zyklon 9 separat abgezogen und zur Vermeidung von Abrasion getrennt über die oder in Höhe der Windformen in den Hochofen eingeblasen.

### Anwendungsfall 2

Beim Anwendungsfall 2 wird der Vergasungsprozeß 1 wie beim Anwendungsfall 1 beschrieben und in Figur 1 dargestellt betrieben. Dem Brenner 3 der ersten Prozeßstufe 4 und den Lanzen 7 der zweiten Prozeßstufe 5 des Vergasungsprozesses 1 werden ebenfalls nur externe Brennstoffe über das Dichtstromfördersystem 10 zugeführt, wobei den Brennstoffen, die über die Lanzen 7 der zweiten Prozeßstufe 5 zugeführt werden, Feinerz und/oder Erzkonzentrat mit Hilfe der Dosierung 18 zugemischt wird.

Das im Zyklon 9 anfallende Reduktionsgas wird wie beim Anwendungsfall 1 über die Windformen in den Hochofenprozeß 1 und/oder nach Druckerhöhung als Vergasungsmittel über den Brenner 3 der ersten Prozeßstufe 4 des Vergasungsprozesses 1 zugeführt oder anderweitig verwendet, während das ebenfalls im Zyklon 9 anfallende Gemisch aus Restkoks, Eisenschwamm und vorreduziertem Erz mit Hilfe des Dichtstromfördersystems 17 über die Windformen oder in Höhe der Windformen in den Hochofenprozeß 1 eingeblasen wird.

## Patentansprüche

1. Verfahren zur Erzeugung von Roheisen mit Hilfe von fossilen und nachwachsenden Brennstoffen, insbesondere von Stein- und Braunkohlen oder anderen organischen Brennstoffen, wie Müll und Klärschlamm, aus Eisenerzen oder anderen Eisenoxiden, die naturbelassen oder aufbereitet, z. B. als Sinter, Pellets, Feinerz oder Konzentrat bereitgestellt werden, in einem Hochofenprozeß mit einer externen Vergasung der Brennstoffe, **dadurch gekennzeichnet,** daß
- bei der Vergasung in einer ersten Prozeßstufe ein Teil der Brennstoffe mit Luft und/oder Sauerstoff unter Zugabe von Gichtgas aus dem Hochofenprozeß und/oder Wasserdampf unter einem Druck, der höher als der Druck im Hochofen in Höhe der Windformen ist und bei einer Temperatur zwischen 1000 und 1800°C chemisch-exotherm zu Reduktionsgas vergast werden;
- in einer zweiten Vergasungsprozeßstufe weitere Brennstoffe in das heiße Reduktionsgas aus der ersten Prozeßstufe eingeblasen werden, dort teilweise mit dem Reduktionsgas chemisch-endotherm reagieren und das Molverhältnis der reduzierenden Gasbestandteile Kohlenmonoxid und Wasserstoff zu denen der oxidierenden Bestandteile Kohlendioxid und Wasserdampf mindestens 3:1 beträgt und
- das Reduktionsgas aus der zweiten Vergasungsstufe in Höhe der Windformen mit einer Temperatur von 300 bis 1000°C in den Hochofen eingeblasen wird.

2. Verfahren zur Erzeugung von Roheisen nach Anspruch 1, **dadurch gekennzeichnet**, daß der Temperaturgradient in den Reduktionszonen des Hochofens durch die Einblasung von in der zweiten Prozeßstufe des Vergasungsverfahrens anfallendem Koksstaub mit dem Reduktionsgas geregelt wird.

3. Verfahren zur Erzeugung von Roheisen nach einem der Ansprüche 1 oder 2, **dadurch gekennzeichnet**, daß der aus dem Reduktionsgas abgeschiedene Koksstaub in den Vergasungsprozeß rückgeführt wird, wobei in dem Vergasungsprozeß die Beschickung mit frischem Brennstoff zu Gunsten des rückgeführten Koksstaubs reduziert wird und bei der Rückführung in die zweite Prozeßstufe zur Sicherstellung eines weitestgehenden Umsatzes zuerst der Koksstaub dem heißen Vergasungsmittel aus der ersten Prozeßstufe in dessen Strömungsrichtung zur thermischen Aktivierung zugeführt und erst danach der frische Brennstoff dem durch die Einblasung des Koksstaubs abgekühlten Vergasungsmittel zugeführt wird.

4. Verfahren zur Erzeugung von Roheisen nach einem der vorhergehenden Ansprüche, **dadurch gekennzeichnet**, daß
- den externen, vorzugsweise staubförmigen, Brennstoffen vor dem Einblasen in die zweite Prozeßstufe des Vergasungsprozesses Eisenoxidstäube, Feinerz und/oder Eisenerzkonzentrat zugemischt werden;
- dieses Gemisch in die zweite Prozeßstufe eingeblasen wird, wo die Eisenoxidstäube, das Feinerz und/oder Erzkonzentrat teilweise bis zu Eisenschwamm vorreduziert werden;
- das anfallende Feststoffgemisch bestehend aus Restkoks, Eisenschwamm und vorreduziertem Erz mit dem Reduktionsgas aus dem Vergasungsprozeß in eine Staubabscheidung geleitet wird;
- das vom Reduktionsgas abgetrennte Feststoffgemisch in den Hochofenprozeß oder eine Schmelzwanne, unter erfolgender Vergasung des Restkokses mit Luft und/oder Sauerstoff und weiterer Reduzierung des feinkörnigen Erzes zu Eisenschwamm, eingeblasen wird.

## Claims

1. Process for the production of pig iron wich the help of fossil and secondary fuels, especially of hard or brown coals or other organic fuels, such as refuse and sewage sludge, from iron ores or other iron oxides, which are made available as in nature or worked up, e.g. as sinter, pellets, fine ore or concentrate, in a blast furnace process with external gasification of the fuels, **characterised in that**
- in the case of the gasification in the first process step, a part of the fuel is gasified chemically-exothermally with air and/or oxygen with addition of blast furnace gas from the blast furnace process and/or water vapour under a pressure which is higher than the pressure in the blast furnace at the height of the tuyeres and at a temperature between 1000 and 1800°C to give reduction gas;
- in a second gasification process step, further fuel is blown into the hot reduction gas from the first process step, there partly reacts chemically-endothermally with the reduction gas and the mole ratio of the reducing gas components carbon monoxide and hydrogen to those of the oxidising components carbon dioxide and water vapour amounts to at least 3:1 and
- the reduction gas from the second gasification step is blown into the blast furnace at the height of the tuyeres with a temperature of 300 to 1000°C.

2. Process for the production of pig iron according to claim 1, **characterised in that** the temperature gradient in the reduction zones of the blast furnace is regulated by the blowing in with the reductive gas of coke dust obtained from the second process step of the gasification process.

3. Process for the production of pig iron according to one of claims 1 or 2, **characterised in that** coke dust separated from the reduction gas is recycled into the gasification process, whereby, in the gasification process, the supplying with fresh fuel is reduced in favour of the recycled coke dust and, in the case of the recycling into the second process step, for the ensuring of the greatest possible conversion, the coke dust is first supplied to the hot gasification agent from the first process step in its direction of flow for the thermal activation and only thereafter the fresh fuel is supplied to the cooled gasification agent by the blowing in of the coke dust.

4. Process for the production of pig iron according to one of the preceding claims, **characterised in that**
- to the external, preferably powdery fuels, before the blowing into the second process step of the gasification process, are admixed iron oxide dusts, fine ore and/or iron ore concentrate;
- this mixture is blown into the second process step, where the iron oxide dusts, the fine ore and/or ore concentrate are partly pre-reduced to iron sponge;
- the solid mixture obtained, consisting of residual coke, iron sponge and pre-reduced ore, is passed with the reduction gas from the gasification process into a dust separator;
- the solids mixture separated from the reduction gas is blown into the blast furnace process or a melting trough with gasification taking place of the residual coke with air and/or oxygen and further reduction of the fine-grained ore to iron sponge.

## Revendications

1. Procédé de production de fonte brute à l'aide de combustibles fossiles et renouvelables, en particulier de houilles et de lignites ou d'autres combustibles organiques tels que déchets et boues de curage, à partir de minerais de fer ou autres oxydes de fer fournis à l'état naturel ou traité, p.ex. sous forme d'aggloméré, boulettes, fines de minerai ou concentré, dans un processus du haut fourneau avec une gazéification externe des combustibles, caractérisé
- en ce que lors de la gazéification, dans une première étape du processus, en présence d'air et/ou d'oxygène additionné de gaz de gueulard issu du processus du haut fourneau, et de vapeur d'eau sous une pression supérieure à la pression régnant dans le haut fourneau au niveau des tuyères à vent, et à une température comprise entre 1000 et 1800°C, une partie des combustibles subit une gazéification chimique exotherme en gaz réducteur ;
- en ce que dans une deuxième étape du processus de gazéification, d'autres combustibles sont injectés dans le gaz réducteur chaud issu de la première étape du processus, en ce qu'ils y subissent en partie une réaction chimique endothermique avec ledit gaz réducteur et en ce que le rapport molaire entre les composants du gaz à réduire monoxyde de carbone et vapeur d'eau et les composants oxydants dioxyde de carbone et vapeur d'eau est au moins égal à 3/1, et
- en ce que le gaz réducteur issu de la deuxième étape de gazéification est injecté dans le haut fourneau au niveau des tuyères à vent, à une température comprise entre 300 et 1000°C.

2. Procédé de production de fonte brute selon la revendication 1, **caractérisé en ce que** le gradient de température dans les zones de réduction du haut fourneau, dû à l'injection de poussier de coke produit dans la deuxième étape du processus, est réglé avec le gaz réducteur.

3. Procédé de production de fonte brute selon l'une des revendications 1 ou 2, **caractérisé en ce que** le poussier de coke séparé du gaz réducteur est recyclé vers le processus de gazéification, dans ledit processus de gazéification l'alimentation en combustible frais étant réduite en faveur du poussier de coke recyclé, et lors du recyclage vers la deuxième étape du processus, afin de garantir une transformation maximale, c'est d'abord le poussier de coke qui est amené au gaz chaud issu de la première étape du processus, dans le sens d'écoulement de celui-ci pour permettre l'activation thermique et ce n'est qu'après que le combustible frais est amené au gaz refroidi par l'injection du poussier de coke.

4. Procédé de production de fonte brute selon l'une des revendications précédentes, caractérisé
- en ce que de la poussière d'oxyde de fer, des fines de minerai et/ou du concentré de minerai de fer sont mélangés aux combustibles externes de préférence pulvérulents, avant l'injection dans la deuxième étape du processus de gazéification ;
- en ce que ce mélange est injecté dans la deuxième étape du processus où la poussière d'oxyde de fer, les fines de minerai et/ou le concentré de minerai sont partiellement préréduits en éponge de fer ;
- en ce que le mélange de matières solides obtenu composé de coke résiduel, d'éponge de fer et de minerai préréduit est conduit avec le gaz réduit issu du processus de gazéification dans un cyclone ;
- en ce que le mélange de matières solides séparé du gaz réducteur est injecté dans le processus du haut fourneau ou dans une cuve, en effectuant la gazéification du coke résiduel en présence d'air et/ou d'oxygène et en poursuivant la réduction du minerai à grain fin en éponge de fer.
